# EUROPÄISCHE PATENTANMELDUNG

(11) **EP 1 956 211 A2**
(43) Veröffentlichungstag der Anmeldung: **13.08.2008**
(21) Anmeldenummer: 08405005.3
(22) Anmeldetag: 09.01.2008
(51) Int. Cl.: F02B 25/04

(54) **Verfahren zur Beladung eines Zylinders eines längsgespülten Zweitakt-Grossdieselmotors mit Ladeluft, sowie ein längsgespülter Zweitakt-Grossdieselmotor**

(30) Priorität: 08.02.2007 EP 07405038
(71) Anmelder: Wärtsilä Schweiz AG, 8401 Winterthur (CH)
(72) Erfinder: Häni, Thomas, 8406 Winterhur (CH)
(74) Vertreter: Sulzer Management AG

(57) **Zusammenfassung**

Die Erfindung betrifft ein Verfahren zur Beladung eines Zylinders (2) eines längsgespülten Zweitakt-Grossdieselmotors (1) mit Ladeluft (3), wobei an einem Einlassbereich (4) des Zylinders (2) zur Zuführung der Ladeluft (3) Spülschlitze (5) vorgesehen werden und an einem Zylinderdeckel (6) des Zylinders (2) zum Ausstoss eines Verbrennungsgases (7) ein Auslassventil (8) vorgesehen wird. Bei dem Verfahren der vorliegenden Erfindung wird eine unter einem Umgebungsdruck (P₀) bereitstehende Frischluft (9) von einem Abgasturbolader (10) angesaugt und dem Zylinder (2) als Ladeluft (3) unter einem vorgegebenen Ladeluftdruck (P_{L}) über die Spülschlitze (5) zugeführt. Erfindungsgemäss wird ein Temperatursensor (12, 13) zur Messung einer Ansaugtemperatur (T₀) der Frischluft (9) und / oder zur Messung einer Ladelufttemperatur (T_{L}) der Ladeluft (3) vorgesehen, wobei im Betriebszustand die Ansaugtemperatur (T₀) und / oder die Ladelufttemperatur (T_{L}) mit dem Temperatursensor (12, 13) gemessen wird. Aus der Ansaugtemperatur (T₀) und / oder der Ladelufttemperatur (T_{L}) wird eine Luftmenge an Ladeluft (3) ermittelt, mit welcher der Zylinder (2) beladen wird. Durch Ansteuerung des Auslassventils (8) wird die ermittelte Luftmenge an Ladeluft (3) dem Zylinder (2) zur Verfügung gestellt. Die Erfindung betrifft weiterhin einen längsgespülten Zweitakt-Grossdieselmotor zur Durchführung des Verfahrens.

## Beschreibung

Die Erfindung betrifft ein Verfahren zur Beladung eines Zylinders eines längsgespülten Zweitakt-Grossdieselmotors mit Ladeluft, sowie einen längsgespülten Zweitakt-Grossdieselmotor gemäss dem Oberbegriff der unabhängigen Ansprüche 1 und 9.

Zur Leistungssteigerung von Hubkolbenbrennkraftmaschinen, wie zum Beispiel von Grossdieselmotoren für Schiffe oder stationäre Anlagen zur Erzeugung elektrischer Energie, wird nach einem Verbrennungstakt die Frischluft mittels einer Aufladegruppe, die in der Regel als Abgasturbolader ausgelegt ist, unter erhöhtem Druck in den Brennraum eines Zylinders eingebracht. Dabei kann ein Teil der thermischen Energie der Abgase ausgenutzt werden, die den Brennraum des Zylinders nach dem Verbrennungstakt verlassen. Dazu werden die heissen Abgase durch Öffnen eines Auslassventils aus dem Brennraum des Zylinders der Aufladegruppe zugeführt. Die Aufladegruppe besteht im wesentlichen aus einer Turbine, die durch die unter Druck in die Aufladegruppe eintretenden heissen Abgase angetrieben wird. Die Turbine treibt ihrerseits einen Verdichter an, wodurch Frischluft angesaugt und verdichtet wird. Den Verdichter mit Turbine, eine Anordnung, die häufig auch einfach als Turbolader bezeichnet wird und der insbesondere, aber nicht nur, im Fall von Zweitakt Grossdieselmotoren als Verdichter einen Radialverdichter verwendet, ist ein sogenannter Diffusor, ein Ladeluftkühler, ein Wasserabscheider und ein Einlassreceiver nachgeschaltet, von wo aus die komprimierte Frischluft, auch als Ladeluft oder Spülluft bezeichnet, schliesslich in die einzelnen Brennräume der Zylinder des Grossdieselmotors eingespeist wird. Durch den Einsatz einer solchen Aufladegruppe kann somit die Frischluftzufuhr erhöht und die Effizienz des Verbrennungsvorgangs im Brennraum des Zylinders gesteigert werden.

Im Fall von Grossdieselmotoren erfolgt, je nach Typ, die Einspeisung der Luft an unterschiedlichen Stellen am Zylinder. So wird beispielsweise bei längs gespülten Zweitakt-Motoren die Luft über Spülschlitze, die in der Lauffläche im unteren Bereich des Zylinders angeordnet sind, in den Brennraum des Zylinders eingebracht. Bei Viertakt-Motoren wird die Ladeluft in der Regel über ein oder mehrere Einlassventile, die im Zylinderdeckel angeordnet sind, in den Brennraum des Zylinders eingebracht. Dabei sind durchaus auch Zweitakt-Motoren bekannt, die an Stelle von Spülschlitzen im unteren Bereich des Zylinders mit Einlassventilen im Zylinderdeckel ausgerüstet sind.

Eine zentrale Bedeutung für die Frischluftversorgung der Zylinder kommt dabei dem oben bereits erwähnten Ladeluftkühler zu. Wie dem Fachmann wohlbekannt ist, handelt es sich bei den bekannten Ladeluftkühlern um ein im wesentlichen quaderförmiges Gehäuse, in welchem Kühlpakete untergebracht sind, die die Ladeluft vom Eingang des Ladeluftkühlers zum Ausgang des Ladeluftkühlers zur Kühlung der Ladeluft durchströmt. Die Ladeluft wird dabei massiv abgekühlt, typischerweise z.B. von 250°C auf 50°C, so dass neben der Kühlung der Luft im Ladeluftkühler auch Wasser aus der Ladeluft im Ladeluftkühler kondensiert.

Bei warmer Umgebungstemperatur, eventuell tiefem Umgebungsdruck und /oder schlechter Aufladung und / oder nicht ausreichender Ladeluftkühlung wird jedoch der Motor im Betriebszustand thermisch höher belastet. Durch eine erhöhte Ansaugtemperatur, z.B. aufgrund einer hohen Aussentemperatur der Umgebungsluft, wie sie unter anderem regelmässig in tropischen Gebieten anzutreffen ist, und / oder bei tiefem Umgebungsdruck wird der Luftdurchsatz und damit der Luftüberschuss im Zylinder verringert. Durch die verringerte Luftmasse und des daraus resultierenden geringeren Wärmeaufnahmevermögens, also z.B. einer verringerten Wärmekapazität während des Kompressions- und Verbrennungstaktes erhöht sich die Verbrennungstemperatur und entsprechend die thermische Belastung des Motors.

Bei der Auslegung und Optimierung eines längsgespülten Grossdieselmotors müssen unter anderem diese Bedingungen, d.h. tropische Temperaturen von bis zu 45°C oder sogar mehr, bzw. ein reduzierter Luftdruck der Umgebungsluft, entsprechend berücksichtigt werden, was zwingend zu einem Kompromiss bezüglich einer optimalen Performance unter ISO Bedingungen führt.

Bei den vorgenannten aus dem Stand der Technik genannten Verfahren zur Optimierung des Motors unter Referenz Bedingungen (ISO) musste bisher ein erhöhter Treibstoffverbrauch und / oder eine verschlechterte Schadstoffbilanz, z.B. ein erhöhter NOₓ-Austoss in Kauf genommen werden, bzw. Einbussen bei der Leistung in Kauf genommen werden.

Aber selbst wenn man alle diese Kompromisse in Kauf nimmt, lässt sich das Problem der erhöhten thermischen Belastung des Motors nicht vollständig beheben. Das heisst, bei den bekannten Optimierungsverfahren wird die thermische Belastung des Motors zwar zu einem gewissen Grad reduziert, jedoch nicht vollständig auf ein eigentlich wünschenswertes Mass reduziert.

Das führt dazu, dass trotz Anwendung aller im Stand der Technik bekannter Massnahmen, die Motoren, speziell die längsgespülten Zweitakt-Grossdieselmotoren, z.B. unter tropischen Bedingungen ständig unter einer erhöhten thermischen Belastung betrieben werden müssen, so dass ein erhöhter Verschleiss und kürzere Wartungsintervalle in Kauf genommen werden müssen, was letztlich zu deutlich erhöhten Betriebskosten führt und, was häufig noch schlimmer ist, zu einer erhöhten Ausfallwahrscheinlichkeit einzelner Komponenten, oder sogar der ganzen Maschine als solches.

Ein weiterer Nachteil der bekannten Methoden zur Anpassung der Motoren an tropische Bedingungen liegt ebenfalls klar auf der Hand: Wenn z.B. ein Schiff die tropischen Regionen verlässt, d.h. zwischen tropischen Gebieten und nicht tropischen Gebieten, im Extremfall zwischen tropischen Gewässern und polaren Gewässern pendelt, können logischerweise die Motoren nicht gleichzeitig auf beide extrem entgegen gesetzte Umweltbedingungen optimiert werden: Ist eine entsprechende Maschine baulich auf tropische Bedingungen optimiert, wird sie in polaren Gebieten entsprechende Nachteile haben, wie unter anderem z.B. erhöhter Treibstoffverbrauch, erhöhter NOₓ-Austoss, usw. und wird unter thermisch nicht angepassten Bedingen betrieben werden müssen. Das gleiche gilt natürlich im umgekehrten Fall.

Daher wird seit einiger Zeit über flexiblere Lösungen nachgedacht, die nicht auf statischen baulichen Veränderungen an den Motoren beruhen, die dazu führen, dass die Motoren jeweils nur an eine bestimmte Umweltbedingung, z.B. an tropische, optimal angepasst sind, sondern es wird nach Alternativen gesucht, bei denen durch Anpassung bestimmter Betriebsparameter der Motor an eine spezielle Umweltbedingung angepasst werden kann.

Seit längerem wird zu dieser Problematik in Fachkreisen eine zylinderdruckabhängige Einspritzzeitpunkt-Regelung diskutiert. Diese Lösung hat sich jedoch als wenig "realitätsbezogen" und als wenig schonend für den Motor, insbesondere im Fall von langsgespülten Zweitakt-Grossdieselmotoren herausgestellt, da das Grundproblem, nämlich einer ungenügenden oder einer überhöhten Beladung des Zylinders mit Kühlluft durch eine solche Massnahme natürlich nicht gelöst werden kann. Das hat zur Folge, dass auch mit dieser Methode schlechte Kompromisse in Bezug auf den Treibstoffverbrauch, den NOₓ-Ausstoss und in Bezug auf die thermische Belastung des Motors unausweichlich sind.

Die Aufgabe der Erfindung ist es daher, ein Verfahren zur Optimierung der Beladung eines Zylinders eines längsgespülten Zweitakt-Grossdieselmotors vorzuschlagen, mit welchem insbesondere unter tropischen Bedingungen die Beladung des Zylinders mit Ladeluft deutlich verbessert wird, und sowohl unter tropischen wie nicht tropischen Bedingungen die Temperaturbelastung des Motors optimal angepasst wird, bei gleichzeitiger Optimierung von Leistung, Treibstoffverbrauch und Abgasverhalten. Ausserdem ist es eine Aufgabe der Erfindung, einen verbesserten Motor zur Durchführung eines solchen Verfahrens vorzuschlagen.

Die diese Aufgaben lösenden Gegenstände der Erfindung sind durch die Merkmale der unabhängigen Ansprüche 1 und 10 gekennzeichnet.

Die abhängigen Ansprüche beziehen sich auf besonders vorteilhafte Ausführungsformen der Erfindung.

Die Erfindung betrifft somit ein Verfahren zur Beladung eines Zylinders eines längsgespülten Zweitakt-Grossdieselmotors mit Ladeluft, wobei an einem Einlassbereich des Zylinders zur Zuführung der Ladeluft Spülschlitze vorgesehen werden und an einem Zylinderdeckel des Zylinders zum Ausstoss eines Verbrennungsgases ein Auslassventil vorgesehen wird. Bei dem Verfahren der vorliegenden Erfindung wird eine unter einem Umgebungsdruck bereitstehende Frischluft von einem Abgasturbolader angesaugt und dem Zylinder als Ladeluft unter einem vorgegebenen Ladeluftdruck über die Spülschlitze zugeführt. Erfindungsgemäss wird ein Temperatursensor zur Messung einer Ansaugtemperatur der Frischluft und / oder zur Messung einer Ladelufttemperatur der Ladeluft vorgesehen, wobei im Betriebszustand die Ansaugtemperatur und / oder die Ladelufttemperatur mit dem Temperatursensor gemessen wird. Aus der Ansaugtemperatur und / oder der Ladelufttemperatur wird eine Luftmenge an Ladeluft ermittelt, mit welcher der Zylinder beladen wird. Durch Ansteuerung des Auslassventils wird die ermittelte Luftmenge an Ladeluft dem Zylinder zur Verfügung gestellt.

Die ermittelte Luftmenge, die dem Zylinder zur Verfügung gestellt wird, ist dabei die Menge an Ladeluft, die nach dem Schliessen von Spülschlitzen und Auslassventil tatsächlich zur Verbrennung im Zylinder eingeschlossen wird. Davon ist die Menge an Ladeluft zu unterscheiden, die während dem Spülvorgang durch die Spülschlitze in den Zylinder eintritt. Wie dem Fachmann wohl bekannt ist, ist nämlich die im Zylinder zur Verbrennung eingeschlossene neu zugeführte Ladeluft gerade die Differenz zwischen der Menge an Ladeluft, die während dem Spülvorgang insgesamt durch die Spülschlitze in den Zylinder eintritt, abzüglich der Menge an Ladeluft, die zusammen mit den Verbrennungsgasen während des Spültaktes vor der Verbrennung und vor dem Schliessen des Auslassventils durch das Auslassventil wieder austritt.

Durch die vorliegende Erfindung hat sich gezeigt, dass die Regulierung der Menge an Ladeluft, die dem Zylinder je nach wechselnden Umweltbedingungen zugeführt wird, viel "realitätsbezogener", sicherer und vor allem schonender für den Motor ist, als die aus dem Stand der Technik bereits bekannte Anpassung des Einspritzzeitpunkts bzw. der Einspritzmenge allein.

Bei der vorliegenden Erfindung werden der Motorensteuerung von längsgespülten Zweitakt Dieselmotoren zusätzlich zumindest Informationen über die Temperatur der Ansaugluft, also der Frischluft, die vom Turoblader angesaugt wird, und / oder der Ladeluft, die dem Zylinder zugeführt wird, zur Verfügung gestellt. Um, wie weiter unten beschrieben die notwendige Menge an Spülluft ermitteln zu können, ist zusätzlich jedoch zumindest noch eine Information über den äusseren Luftdruck und / oder den Ladedruck notwendig. Im einfachsten Fall kann der äussere Luftdruck dazu einfach mit einem fixen Wert von einem Bar angenommen werden, da erstens der tatsächliche äussere Luftdruck in der Praxis von diesem Wert nur wenig abweicht. So entsprechen z.B. Abweichungen von nur +/- 50 Millibar bereits einem Luftdruckunterschied zwischen einer ausgeprägten Hochdruck bzw. Niederdruckwetterlage. Im übrigen, wie man z.B. den unten stehenden Tabellen entnehmen kann, sind die Schwankungen im Barometer, d.h. die Schwankungen im Umgebungsluftdruck eher von untergeordneter Bedeutung, und werden, wie weiter unten noch beschrieben, nur für eine besonders empfindliche Feinabstimmung des Motors benötigt.

Es versteht sich, dass bei der Ermittelung der Luftmenge an Ladeluft, die dem Zylinder zur Verfügung gestellt werden muss, Eigenschaften und Parameter des Motors als solches zusätzlich in Betracht gezogen werden müssen, wie z.B. die Motor und / oder Turboladercharakteristik, also die Charakteristiken der entscheidenden im Motor verwendeten Komponenten.

Aus diesen Daten kann dann die Motorsteuerung, zum Beispiel mittels einer integrierten oder einer externen Datenverarbeitungsanlage, optimale Steuerparameter zur Steuerung des Auslassventils ermitteln, so dass die Zylinder des Motors optimal mit Ladeluft beladen werden, d.h., dass durch eine entsprechende Steuerung des Auslassventils einerseits eine solche Menge an Luft dem Zylinder zur Verfügung gestellt wird, dass eine optimale Kühlung im Zylinder erreicht wird, so dass die Komponenten des Motors thermisch nicht überlastetet werden. Gleichzeitig kann dadurch ein optimaler Kompressionsdruckverlauf bzw. Zündruckverlauf im Zylinder eingestellt werden, so dass gleichzeitig der Treibstoffverbrauch, die Leistung, der Schadstoffausstoss, insbesondere der NOₓ-Austoss und, wie bereits erwähnt, die thermische Belastung des Grossdieselmotors gleichzeitig optimierbar sind.

In vorteilhaften Fortbildungen des erfindungsgemässen Verfahrens, kann, wie erwähnt, zusätzlich ein Umgebungsdrucksensor zur Messung des Umgebungsdrucks vorgesehen werden, der Umgebungsdruck mit dem Umgebungsdrucksensor gemessen werden und unter Berücksichtigung des Umgebungsdrucks die Luftmenge an Ladeluft ermittelt werden.

Darüber hinaus kann, wie weiter unten noch beschrieben werden wird, auch neben weiteren Parametern zusätzlich der Motorsteuerung noch die Temperatur und / oder der Druck der Spülluft durch Messung dieser Grössen mit geeigneten Sensoren zur Verfügung gestellt werden und, wie gesagt, Daten zum Umgebungsdruck, also zum äusseren Luftdruck, unter der die angesaugte Frischluft unter den aktuellen Umgebungsbedingungen steht und / oder der Ladedruck, mit der die Ladeluft in den Brennraum des Zylinders gepresst wird, der Motorensteuerung zur Feinabstimmung zur Verfügung gestellt werden.

Anhand der vorgenannten zusätzlichen Messgrössen, die bevorzugt basierend z.B. auf vordefinierten Kennfeldern ausgewertet werden, kann der Motor im Hinblick auf optimale Performance und max. zulässige thermische Belastung in Abhängigkeit von den Umgebungsbedingungen, dem Zustand des Turboladers und Ladeluftkühlers gesteuert werden.

Somit kann der Motor nicht nur auf wechselnde Umweltbedingungen jederzeit flexibel optimal eingestellt werden, auch Änderungen, die sich unter gleichbleibenden Umweltbedingungen, z.B., aber nicht nur, bei stationär eingerichteten Grossdieselmotoren, die zum Beispiel an Land zur Erzeugung elektrischer Energie fest installiert sind, beispielweise aufgrund von zunehmendem Verschleiss bestimmter Komponenten des Grossdieselmotors einstellen, flexibel nachgeregelt werden. Somit kann ein Grossdieselmotor durch Anwendung des erfindungsgemässen Verfahrens auch auf betriebsbedingte Änderungen, wie Verschleiss, Abnutzung verschiedener Komponenten, deren Einlaufverhalten usw. im Betriebsverhalten des Motors immer unter optimalen Bedingungen betrieben werden.

Bei einer besonders bevorzugten Ausführungsvariante des erfindungsgemässen Verfahrens wird speziell eine Masse der Luftmenge an Ladeluft ermittelt, die dem Zylinder zugeführt wird. Wesentlich für die Kühlwirkung der in den Zylinder geladenen Ladeluft ist nämlich in erster Linie die Masse der geladenen Luft und nicht deren Volumen. Bei erhöhter Aussentemperatur, wie sie z.B. typischerweise in tropischen Gebieten herrscht, wird nämlich bei gleichem geladenen Volumen an Ladeluft wie bei niedrigerer Umgebungstemperatur, weniger Masse an Ladeluft in den Zylinder geladen. Dadurch ist bei gleichem Volumen an Ladeluft die Kühlwirkung allein schon deshalb viel geringer, weil das Wärmeaufnahmevermögen, also z.B. die Wärmekapazität der in den Zylinder geladenen Ladeluft insgesamt kleiner ist, da die, wie dem Fachmann an sich bekannt, die Wärmekapazität eines Gases unter anderem von dessen Masse abhängt.

In einem speziellen Ausführungsbeispiel eines erfindungsgemässen Verfahrens wird die Ansaugtemperatur in einem Ansaugfilter des Abgasturboladers, bevorzugt elektrisch mit einem Widerstandsthermometer, im Speziellen mit einem PT100 Widerstandsthermometer gemessen, und /oder die Ladelufttemperatur wird zwischen einem Ladeluftkühler und einem Receiverraum und / oder im Receiverraum, bevorzugt elektrisch mit einem Widerstandsthermometer, im Speziellen mit einem PT100 Widerstandsthermometer gemessen.

Wird die Temperatur und / oder der Druck der Ladeluft nicht direkt im Zylinder gemessen, so kann der tatsächlich Druck bzw. die tatsächliche Temperatur der Ladeluft im Zylinder einfach z.B. durch vorhergehende Eichung oder durch andere an sich bekannte mathematische Verfahren einfach bestimmt werden, so dass der Ort der Druck- bzw. Temperaturmessung der Ladeluft eher eine untergeordnete Rolle spielt.

Die Temperatur und der Druck der angesaugten Frischluft wird natürlich bevorzugt vor dem Eintritt in den Turbolader gemessen. D.h., der Umgebungsdruck wird besonders vorteilhaft im Ansaugfilter des Abgasturboladers, bevorzugt mit einem Umgebungsdrucktransmitter, im Speziellen mit einem elektrischen Umgebungsdrucktransmitter, beispielweise mit einem absolut Drucktransmitter Keller 33X gemessen und / oder der Ladeluftdruck wird zwischen dem Ladeluftkühler dem Receiverraum und /oder im Receiverraum, bevorzugt mit einem relativen Ladedrucktransmitter, im Speziellen mit einem elektrischen Ladedrucktransmitter, beispielsweise aber auch mit einem Drucktransmitter Keller 33X gemessen.

Wie bereits oben erwähnt, kann zur Einstellung der Luftmenge an Ladeluft ein Öffnungswinkel und / oder ein Schliesswinkel des Auslassventils aus der Ansaugtemperatur und / oder der Ladelufttemperatur und / oder dem Umgebungsdruck und / oder dem Ladeluftdruck ermittelt werden, bevorzugt mit einer Formel errechnet werden, im Speziellen aus einer Look-Up-Tabelle und / oder einem Kennlinienfeld, insbesondere als Funktion der Drehzahl und / oder der Leistung und / oder der Last ermittelt werden, die z.B. in einer Datenverarbeitungsanlage hinterlegt sind und beispielweise aus Eichmessungen ermittelt wurden.

Zur Optimierung eines Betriebsparameters, insbesondere zur Optimierung einer Betriebstemperatur und / oder eines Treibstoffverbrauchs und / oder einer Leistung und / oder eines Abgasverhaltens, kann zusätzlich ein Einspritzbeginn und / oder ein Einspritzende aus der Ansaugtemperatur und /oder der Ladelufttemperatur und / oder dem Umgebungsdruck und / oder dem Ladeluftdruck ermittelt werden, bevorzugt mit einer Formel errechnet werden, im Speziellen aus einer Look-Up-Tabelle und / oder einem Kennlinienfeld, insbesondere als Funktion der Drehzahl und / oder der Leistung und / oder der Last ermittelt werden.

Um das Betriebsverhalten des längsgespülten Zweitakt-Grossdieselmotors weiter zu verbessern, kann auch ein Kompressionsdruckverlauf und / oder ein Zünddruckverlauf im Zylinder aus den oben erwähnten vorliegenden Daten, eventuell unter Zuhilfenahme der Look-Up-Tabellen oder anderer Eichkurven oder Eichtabellen optimiert werden.

Weiter kann zur Verbesserung des Betriebsverhaltens des Motors in einem ersten Zylinder ein Zylinderdrucksensor vorgesehen werden und in einem zweiten Zylinder ein Zylinderdrucksensor vorgesehen werden, ein Zylinderdruck im ersten Zylinder und im zweiten Zylinder gemessen werden, und ein Zünddruckunterschied zwischen dem ersten Zylinder und dem zweiten Zylinder kompensiert werden.

In den Tabellen 1.1 bis Tabelle 1.3 ist beispielhaft der Einfluss der Umgebungsbedingungen auf den Betriebszustand eines Zweitakt-Grossdieselmotors bei einer typischen Last aufgelistet, sowie der Einfluss bestimmter Anpassungen und die Verbesserungen durch die Anpassung der Motorsteuerung.

**Tabelle 1.1: Einfluss ohne Anpassung der Motorsteuerungsparameter**

| | | Basis ISO | Einfluss ohne Anpassung der Motorsteuerungs Parameter | | | |
|---|---|---|---|---|---|---|
| **Variations Fall** | [-] | - | T_Ansaug | Barometer | eta_Turb. | T_Ladeluft |
| **Ansaugtemperatur** | [°C] | 25 | +20 | - | - | - |
| **Barometer** | [mbar] | 1000 | | - -50 | - | - |
| **Turbolader Wirkungsgrad** | [%] | 69 | - | - | -4 | - |
| **Ladeluft Temperatur** | [°C] | 37.5 | - | - | - | +10 |
| Einspritzbeginn | [°KW v. OTP] | 1 | fix | fix | fix | fix |
| Auslassventil Schliesswinkel | [°KW n. UTP] | 80 | fix | fix | fix | fix |
| Brennstoffverbrauch | [g/kWh] | 170 | +2.1 | +0.3 | +1.5 | +0.9 |
| Ladeluftdruck | [bar] | 3 | -0.18 | -0.04 | -0.04 | 0.07 |
| Kompressionsdruck | [bar] | 103 | -7 | -1 | -5.5 | +2 |
| Zünddruck | [bar] | 140 | -5 | -1.5 | -4.5 | +1 |
| Luftüberschussverhältnis vor Verbrennung | [-] | 2 | -0.2 | -0.03 | -0.13 | -0.02 |
| Bauteiltemperatur (Auslassventil) | [°C] | 575 | +17 | +3 | +15 | +10 |

**Tabelle 1.2: Einfluss mit Anpassung der Motorsteuerungsparameter**

| | | Basis ISO | Einfluss mit Anpassung der Motorsteuerungs Parameter | | | |
|---|---|---|---|---|---|---|
| Variations Fall | [-] | - | T_Ansaug | Barometer | eta_Turb. | T_Ladeluft |
| Ansaugtemperatur | [°C] | 25 | +20 | - | - | - |
| Barometer | [mbar] | 1000 | - | -50 | - | - |
| Turbolader Wirkungsgrad | [%] | 69 | - | - | -4 | - |
| Ladeluft Temperatur | [°C] | 37.5 | - | - | - | +10 |
| Einspritzbeginn | [°KW v. OTP] | 1 | fix | fix | fix | 0.5°CA spät |
| Auslassventil Schliesswinkel | [°KW n. UTP] | 80 | 7°CA früh | 1 °CA früh | 6°CA früh | 2°CA früh |
| Brennstoffverbrauch | [g/kWh] | 170 | +1.2 | +0.1 | +0.7 | +1.3 |
| Ladeluftdruck | [bar] | 3 | -0.20 | -0.04 | -0.04 | 0.09 |
| Kompressionsdruck | [bar] | 103 | 0 | 0 | 0 | +4 |
| Zünddruck | [bar] | 140 | 0 | 0 | 0 | 0 |
| Luftüberschussverhältnis vor Verbrennung | [-] | 2 | -0.1 | -0.01 | -0.05 | +0.01 |
| Bauteiltemperatur (Auslassventil) | [°C] | 575 | +13 | +2 | +13 | +6 |

**Tabelle 1.3: Verbesserung durch Anpassung der Motorsteuerungsparameter**

| | | Basis ISO | Verbesserung durch Anpassung der Motorsteuerungs Parameter | | | |
|---|---|---|---|---|---|---|
| Variations Fall | [-] | - | T_Ansaug | Barometer | eta_Turbo | T-Ladeluft |
| Ansaugtemperatur | [°C] | 25 | - | - | - | - |
| Barometer | [mbar] | 1000 | - | - | - | - |
| Turbolader Wirkungsgrad | [%] | 69 | - | - | - | - |
| Ladeluft Temperatur | [°C] | 37.5 | - | - | - | - |
| Einspritzbeginn | [°KW v. OTP] | 1 | - | - | - | - |
| Auslassventil Schliesswinkel | [°KW n. UTP] | 80 | - | - | - | - |
| Brennstoffverbrauch | [g/kWh] | 170 | -0.9 | -0.2 | -0.8 | +0.4 |
| Ladeluftdruck | [bar] | 3 | -0.02 | -0.004 | -0.004 | 0.015 |
| Kompressionsdruck | [bar] | 103 | +6.7 | +1.5 | +5.5 | +2.5 |
| Zünddruck | [bar] | 140 | +5 | +1 | +5 | -1 |
| Luftüberschussverhältnis vor Verbrennung | [-] | 2 | +0.10 | +0.02 | +0.08 | +0.03 |
| Bauteiltemperatur (Auslassventil) | [°C] | 575 | -4 | -1 | -2 | -4 |

Die Erfindung betrifft weiter einen längsgespülten Zweitakt-Grossdieselmotor mit einem Abgasturbolader, wobei an einem Einlassbereich eines Zylinders des Zeitakt-Grossdieselmotors zur Zuführung einer Ladeluft Spülschlitze vorgesehen sind und an einem Zylinderdeckel des Zylinders zum Ausstoss eines Verbrennungsgases ein Auslassventil vorgesehen ist. Im Betriebszustand wird eine unter einem Umgebungsdruck bereitstehende Frischluft vom Abgasturbolader angesaugt und dem Zylinder als Ladeluft unter einem vorgegebenen Ladeluftdruck über die Spülschlitze zugeführt. Erfindungsgemäss ist ein Temperatursensor zur Messung einer Ansaugtemperatur der Frischluft und / oder zur Messung einer Ladelufttemperatur der Ladeluft vorgesehen, so dass die Ansaugtemperatur und / oder die Ladelufttemperatur mit dem Temperatursensor messbar ist. Dabei sind elektronische Auswertemittel vorgesehen, so dass aus der Ansaugtemperatur und / oder der Ladelufttemperatur eine Luftmenge an Ladeluft ermittelbar ist, mit welcher der Zylinder beladbar ist und es ist weiter eine Ansteuerung für das Auslassventil vorgesehen, so dass durch Ansteuerung des Auslassventils die ermittelte Luftmenge an Ladeluft dem Zylinder im Betriebszustand zur Verfügung gestellt wird.

Im Speziellen kann dabei auch ein Umgebungsdrucksensor zur Messung des Umgebungsdrucks vorgesehen sein.

In einem für die Praxis besonders wichtigen Ausführungsbeispiel ist ein erfindungsgemässer längsgespülter Zweitakt-Grossdieselmotor derart ausgeführt und weisst insbesondere elektronische Mittel und / oder geeignete Datensätze auf, so dass eine Masse der Luftmenge an Ladeluft aus den gemessenen Temperatur-und / oder Druckwerten ermittelbar ist.

Insbesondere kann der Temperatursensor zur Messung der Ansaugtemperatur in einem Ansaugfilter des Abgasturboladers vorgesehen sein, und ist bevorzugt ein elektrisches Widerstandsthermometer, im Speziellen ein PT100 oder PT1000 Widerstandsthermometer oder ein Halbleiterthermometer oder ein anderes elektrisch auslesbares Widerstandsthermometer, und / oder der Temperatursensor zur Messung der Ladelufttemperatur ist zwischen einem Ladeluftkühler und einem Receiverraum und / oder im Receiverraum vorgesehen, und ist bevorzugt ein elektrisches Widerstandsthermometer, im Speziellen ein PT100, ein PT1000, ein Halbleiterwiderstandsthermometer und / oder ein anderes elektrisch auslesbares Widerstandsthermometer.

Dabei kann der Umgebungsdrucksensor zur Messung des Umgebungsdrucks im Ansaugfilter des Abgasturboladers vorgesehen sein, und ist bevorzugt ein absoluter Umgebungsdrucktransmitter, im Speziellen ein elektrischer Umgebungsdrucktransmitter, d.h. ein elektrisch auslesbarer Umgebungsdrucktransmitter und / oder ein Ladedrucksensor ist zur Messung des Ladeluftdrucks zwischen dem Ladeluftkühler und / oder dem Receiverraum und / oder im Receiverraum vorgesehen, und ist bevorzugt ein absoluter oder relativer Ladedrucktransmitter, im Speziellen ein elektrischer Ladedrucktransmitter.

In einem speziellen Ausführungsbeispiel ist in einem ersten Zylinder ein Zylinderdrucksensor vorgesehen und in einem zweiten Zylinder ein Zylinderdrucksensor vorgesehen, so dass ein Zylinderdruck im ersten Zylinder und im zweiten Zylinder messbar ist, und ein Zünddruckunterschied zwischen dem ersten Zylinder und dem zweiten Zylinder durch geeignete Steuerung des Motors, z.B. durch Steuerung und / oder Regelung des Auslassventils und / oder des Einspritzzeitpunkts und / oder Einspritzdauer und / oder durch andere geeignete Steuerungs- und / oder Regelungsmassnahmen kompensierbar ist.

Besonders bevorzugt ist der längsgespülte Zweitakt-Grossdieselmotor ein elektronisch gesteuerter Motor, insbesondere ein Wärtsilä RT-Flex Motor oder ein MAN B&W ME Motor, so dass der Öffnungswinkel und / oder der Schliesswinkel des Auslassventils und / oder ein Einspritzzeitpunkt und / oder eine Einspritzdauer unabhängig elektronisch einstellbar sind und das Auslassventil und / oder die Einspritzdüse bevorzugt hydraulisch betätigbar sind.

Die Erfindung wird im Folgenden an Hand der schematischen Zeichnung näher erläutert. Es zeigen:
- Fig. 1: Schematisch den prinzipiellen Aufbau eines erfindungsgemässen längsgespülten Zweitakt-Grossdieselmotors mit Abgasturbolader System;
- Fig. 2: einen erfindungsgemäss korrigierten Kompressions- und Zünddruckverlauf.

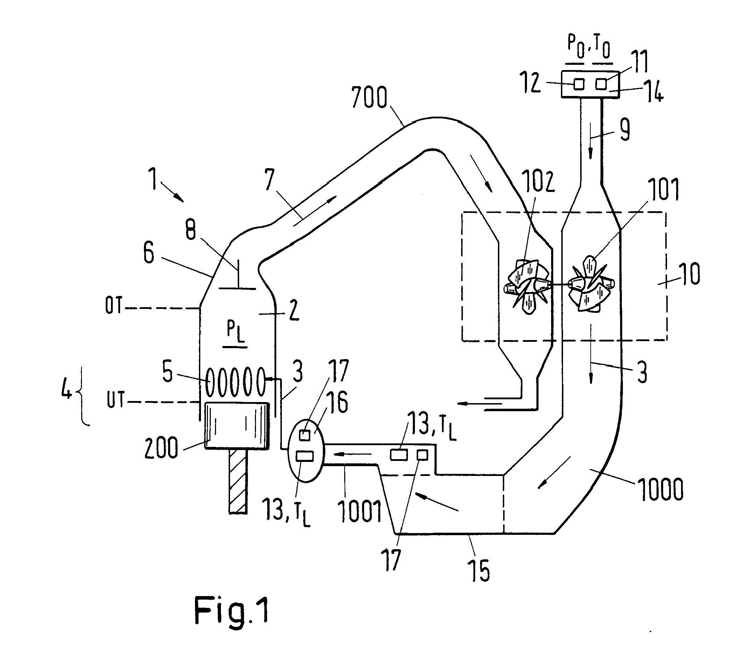

Fig. 1 zeigt in einer schematischen Darstellung zur Erläuterung des Zusammenwirkens der unterschiedlichen Komponenten den prinzipiellen Aufbau eines Abgasturbolader Systems eines Grossdieselmotors, der als Zweitakt-Grossdieselmotor mit Längsspülung ausgebildet ist und der im folgenden gesamthaft mit dem Bezugszeichen 1 bezeichnet wird.

Der Grossdieselmotor 1 umfasst in an sich bekannter Weise üblicherweise mehrere Zylinder 2 mit einem in einem Zylinderdeckel 6 angeordneten Auslassventil 8, in welchem Zylinder 2 ein Kolben 200 zwischen einem unteren Totpunkt UT und einem oberen Totpunkt OT entlang einer Lauffläche hin- und herbewegbar angeordnet ist. Die Zylinderwände des Zylinders 2 mit Zylinderdeckel 6 und der Kolben 200 begrenzen in bekannter Weise einen Brennraum des Zylinders 2. Im unteren Bereich des Zylinders 2 sind mehrere Spülluftöffnungen 5 vorgesehen, die als Spülschlitze 5 ausgeführt sind. Je nach Stellung des Kolbens 200 werden die Spülschlitze 5 von diesem überdeckt oder freigegeben. Durch die Spülluftöffnungen 5 kann die als Ladeluft 3 bezeichnete Spülluft 3 in den Brennraum des Zylinders 2 einströmen. Durch das im Zylinderdeckel 6 angeordnete Auslassventil 8 strömen die bei der Verbrennung entstandenen Verbrennungsgase 7 durch eine Abgasleitung 700, die sich an das Auslassventil 8 anschliesst, in einen Abgasturbolader 10.

Der Abgasturbolader 10 umfasst als wesentliche Komponenten in an sich bekannter Weise einen Verdichter mit Verdichterlaufrad 101 zum Verdichten von Frischluft 9, sowie eine Turbine mit einem Turbinenlaufrad 102 zum Antreiben des Verdichterlaufrads 101, das durch eine Welle in bekannter Weise wirkfest mit dem Turbinenlaufrad 102 verbunden ist. Die Turbine und der Verdichter sind in einem Gehäuse angeordnet und bilden den Abgasturbolader 10, der im vorliegenden Fall verdichterseitig als Radialverdichter ausgebildet ist. Die Turbine wird durch die einströmenden heissen Verbrennungsgase 7 aus dem Brennraum des Zylinders 2 angetrieben.

Zum Beladen des Brennraums des Zylinders 2 mit Ladeluft 3 wird durch das Verdichterlaufrad 101 über einen Ansaugstutzen Frischluft 9 angesaugt und im Abgasturbolader 10 auf einen erhöhten Druck komprimiert, der etwas höher ist, als der letztlich im Zylinder 2 aufgebaute Ladedruck P_{L}. Aus dem Abgasturbolader 10 gelangt die komprimierte Frischluft 9 als Ladeluft 3 durch den nachgeschalteten Diffusor 1000 und den Ladeluftkühler 15 über den Wasserabscheider 1001 in einen Einlassreceiver 16, der bevorzugt als Receiverraum 16 ausgebildet ist und von dem aus die komprimierte Ladeluft 3 schliesslich als Spülluft 3 durch die Spülschlitze 5 unter erhöhtem Druck in den Brennraum des Zylinders 2 gelangt.

Zur Messung des Umgebungsdruck P₀, der gleich dem äusseren Umgebungsluftdruck P₀ der Atmosphäre ist, ist in einem Ansaugfilter des Abgasturboladers 10 ein Umgebungsdrucksensor 11, sowie zur Messung der Ansaugtemperatur T₀ der Frischluft 9 ein PT100 Widerstandsthermometer 12 vorgesehen.

Ausserdem ist bei dem speziellen Ausführungsbeispiel der Fig. 1 zur Messung der Ladelufttemperatur T_{L} zwischen einem Ladeluftkühler 15 und dem Receiverraum 16, sowie im Receiverraum 16 selbst, ein PT100 Widerstandsthermometer 13 vorgesehen. Es versteht sich, dass das erfindungsgemässe Verfahren auch nur mit einem der beiden zuvor genannten Widerstandsthermometer 13 durchführbar ist, wobei durch Messung der Ladelufttemperatur an zwei Stellen in bestimmten Fällen die einzubringende Menge an Ladeluft 3 noch genauer bestimmbar ist.

Weiter wird, wie bereits erwähnt der Umgebungsdruck P₀ im Ansaugfilter 14 des Abgasturboladers 10, bevorzugt mit einem Umgebungsdrucktransmitter 11 gemessen und der Ladeluftdruck P_{L} wird in dem in Fig. 1 dargestellten speziellen Ausführungsbeispiel zwischen dem Ladeluftkühler 15 und dem Receiverraum 16 und gleichzeitig im Receiverraum 16 mit einem Ladedrucktransmitter 17 gemessen wird.

Wie bereits weiter oben ausführlich erläutert werden die erfassten Drücke und Temperaturen zur Einstellung der Luftmenge an Ladeluft 3 verwendet. D.h. ein Öffnungswinkel und / oder ein Schliesswinkel des Auslassventils 8 wird aus der Ansaugtemperatur T₀ und / oder der Ladelufttemperatur T_{L} und / oder aus dem Umgebungsdruck P₀ und / oder dem Ladeluftdruck P_{L} ermittelt was bevorzugt durch Errechnung aus einer geeigneten mathematisch physikalischen Formel geschehen kann, im speziellen auch aus einer Look-Up-Tabelle und / oder einem Kennlinienfeld, insbesondere als Funktion der Drehzahl und / oder der Leistung und / oder der Last ermittelt werden kann.

Ausserdem kann zur Optimierung eines Betriebsparameters, insbesondere zur Optimierung einer Betriebstemperatur und / oder eines Treibstoffverbrauchs und / oder einer Leistung und / oder eines Abgasverhaltens, ein Einspritzbeginn und / oder ein Einspritzende aus der Ansaugtemperatur T₀ und / oder der Ladelufttemperatur T_{L} und / oder dem Umgebungsdruck P₀ und / oder dem Ladeluftdruck P_{L} ermittelt werden.

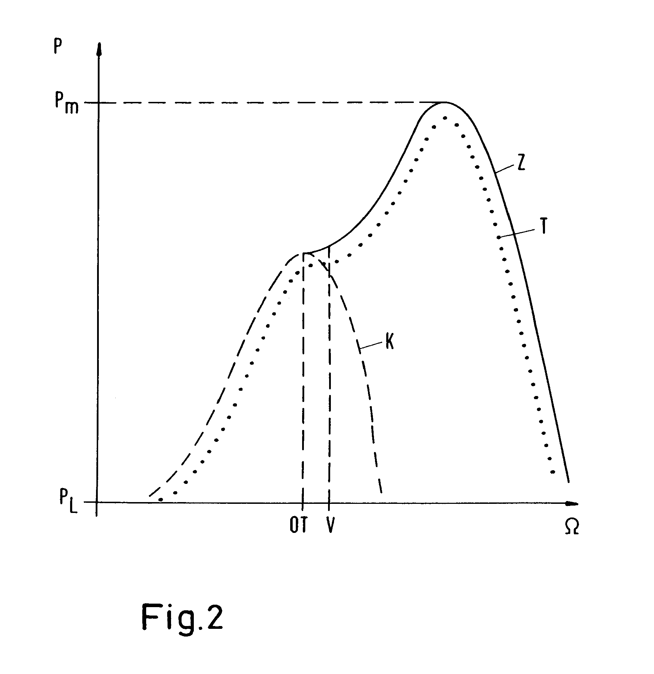

Selbstverständlich ist es das Ziel, aus den so gemessenen Druck- und Temperaturdaten einen Kompressionsdruckverlauf K und / oder ein Zünddruckverlauf Z im Zylinder 2 zu optimieren, wie schematisch in Fig. 2 skizziert.

In Fig. 2 ist in schematischer Darstellung ein erfindungsgemäss korrigierter Kompressions- und Zünddruckverlauf gezeigt.

Bei dem Diagramm der Fig. 2 ist auf der Ordinatenachse der Druck P im Zylinder 2 als Funktion des Kurbelwinkels Ω dargestellt, wobei der Kurbelwinkel Ω auf der Abszissenachse aufgetragen ist.

Die darstellungsgemäss oberen Kurven K, Z zeigen in an sich bekannter Weise einerseits den Kompressionsdruckverlauf K, dargestellt durch die gestrichelte Linie, wie er ohne Verbrennung verlaufen würde. Der Kompressionsdruck K hat, wie der Fachmann weiss bei OT, wenn das Brennraumvolumen im Zylinder 2 am kleinsten ist, einen maximalen Wert.

Im gewöhnlichen Betriebszustand folgt der Druckverlauf jedoch ab einem Kurbelwinkel der ca. dem oberen Totpunkt OT entspricht, dem Verlauf der Kurve Z, also dem Zünddruckverlauf. Wenn z.B. ungefähr bei einem Kurbelwinkel OT Brennstoff in den Brennraum des Zylinders 2 eingespritzt wird beginnt bei einem Kurbelwinkel V die Verbrennung, wobei der Kurbelwinkel V typischerweise bei einem Kurbelwinkel von ca. 1° bis 2° nach dem Kurbelwinkel OT liegt.

Durch die zunehmende Verbrennung des eingespritzten Treibstoffs erhöht sich der Druck weiter bis zu einem maximalen Verbrennungsdruck Pₘ, um dann bei der Bewegung des Kolbens 200 in Richtung zum unteren Totpunkt UT wieder abzufallen, da bei der Bewegung des Kolbens 200 in Richtung zum unteren Totpunkt UT das Volumen des Brennraums wieder vergrössert wird, wobei schliesslich die Spülschlitze vor Erreichen des unteren Totpunktes wieder freigegeben werden, wodurch der Druck P im Zylinder wieder im wesentlichen auf den Ladeluftdruck P_{L} abfällt.

Die unter der Kurve K, Z dargestellte Kurve T stellt den Kompressionsdruckverlauf bzw. den Zünddruckverlauf unter tropischen Bedingungen dar, wenn das erfindungsgemässe Verfahren nicht eingesetzt wird. Da die einströmende Frischluft eine erhöhte Temperatur T₀ hat und /oder der Umgebungsluftdruck P₀ einen niedrigen Wert P₀ hat, ist auch der durch den Abgasturbolader 10 erzeugte Ladeluftdruck kleiner, was dazu führt, dass bei einem Kurbelwinkel OT der Druck im Zylinder kleiner ist, als unter den Umweltbedingungen, die den Kurven K, Z entsprechenden, so dass auch durch die nachfolgende Verbrennung im Zylinder der optimal maximal zu ereichende Gasdruck Pₘ im Zylinder nicht erreicht wird.

Durch Anwendung des erfindungsgemässen Verfahrens kann das Auslassventil jetzt so gesteuert werden, dass auch unter tropischen Bedingungen im wesentlichen ein Kompressions- und Zünddruckverlauf gemäss der als optimal anzusehenden Kurven K, Z erreicht wird, indem zum Beispiel das Auslassventil 8 bei einem etwas kleineren Kurbelwinkel Ω, also etwas früher geschlossen wird, als unter nicht tropischen Bedingungen.

Der Fachmann versteht sofort, dass auch der umgekehrte Fall sehr vorteilhaft durch das erfindungsgemässe Verfahren mit einem erfindungsgemässen Motor korrigierbar ist.

Wenn beispielsweise der Motor unter polaren Bedingungen, d.h. bei sehr niedriger Frischlufttemperatur T₀ und / oder unter erhöhtem Umgebungsdruck P₀ betrieben wird, kann es sein, dass die Kompressionsdruckkurve V bzw. die Zünddruckkurve Z über einen Teil oder den gesamtem Kurbelwinkelbereich der Kurbelwinkel Ω bei zu hohen Zylinderdrücken P verläuft, was ebenfalls zu nicht optimalen Betriebsbedingungen führt, so dass z.B. dadurch, dass das Auslassventil bei einem etwas grösseren Kurbelwinkel Ω, also etwas später geschlossen wird, der Druckverlauf zu etwas kleineren Werten korrigierbar ist, so dass der Druckverlauf P im Zylinder 2 wieder der optimalen Kurve K, Z folgt.

Zusammenfassend kann festgestellt werden, dass der besondere Vorteil des erfindungsgemässen Verfahrens bzw. eines erfindungsgemässen Zweitakt-Grossdieselmotors einerseits darin besteht, dass der Motor unter Referenz Bedingungen (ISO) auf besseren Brennstoffverbrauch optimiert werden kann, ohne den Motor unter z.B. tropischen Bedingungen erhöhten thermischen Belastungen auszusetzen.

Die Steuerung der thermischen Belastung wird bevorzugt, in Speziellen Ausführungsvarianten aber nicht nur, durch den Auslassventil Schliesswinkel kontrolliert. Durch einen früheren oder späteren Auslassventil-Schliesswinkel kann die der Verbrennung zur Verfügung stehenden Luftmasse abhängig von der Umgebungsbedingung gesteuert werden.

Zusätzlich kann man anhand der neu zur Verfügung stehenden Messgrössen den Motor so steuern, dass der Zündruck möglichst nahe am gewünschten und optimalen Wert des Zünddrucks liegt. Der Zünddruck kann zusätzlich mit Hilfe von Einspritzzeitpunkt in Kombination mit der Einstellung des Auslassventil-Schließwinkel auf dem optimalen Druck gehalten.

Diese Lösung der Zylinderdruck-Regelung/Steuerung ist im Vergleich zu der bereits seit längerem diskutierten zylinderdruckabhängigen Einspritzzeitpunk-Regelung viel "realitätsbezogener", sicherer und vor allem schonender für den Motor.

Darüber hinaus kann das vorgeschlagene System zusätzlich mit einer Zylinderdruckmessung kombiniert werden um Zündruckunterschiede zwischen den einzelnen Zylindern zu erfassen und per Knopfdruck manuell zu kompensieren. Im weiteren kann das System eine Empfehlung für das Fuel Quality Setting machen, welche dann in einem begrenzten Bereich z.B. manuell oder auch automatisch nachgestellt werden könnte.

Besonders vorteilhaft kann das oben beschriebene System natürlich an einem elektronisch gesteuerten Motor, wie z.B. der bestens bewährten Wärtsilä RT-Flex Technologie verwendet werden. Aber auch an anderen Maschinen, wie z.B. an den von MAN&BW angebotenen MC / MC-C Motoren könnte die vorliegende Erfindung mit Vorteil zur Verbesserung dieser Motoren Anwendung finden.

Dabei ist ein weiterer wichtiger Vorteil der Lösung gemäss der vorliegenden Erfindung, dass die Zusatzkosten zur Installation eines solchen Systems an einem bereits sich im Betrieb befindlichen Motor als sehr gering einzustufen sind, da vergleichweise wenige Komponenten, wie Temperatur und Drucksensoren nachzurüsten sind.

Es versteht sich, dass alle in dieser Anmeldung beschriebenen erfindungsgemässen Ausführungsbeispiele lediglich exemplarisch zu verstehen sind und insbesondere alle Ausführungsvarianten, wie sie im Rahmen der vorliegenden Anmeldung beschrieben bzw. nahegelegt sind, entweder allein oder in allen geeigneten Kombinationen in speziellen Ausführungsbeispielen erfindungsgemässer Ausführungen vorgesehen sein können, so dass auch alle geeigneten Kombinationen der in dieser Anmeldung beschriebenen Ausführungsvarianten durch die vorliegenden Erfindung erfasst und abgedeckt sind.

## Patentansprüche

1. Verfahren zur Beladung eines Zylinders (2) eines längsgespülten Zweitakt-Grossdieselmotors (1) mit Ladeluft (3), wobei an einem Einlassbereich (4) des Zylinders (2) zur Zuführung der Ladeluft (3) Spülschlitze (5) vorgesehen werden und an einem Zylinderdeckel (6) des Zylinders (2) zum Ausstoss eines Verbrennungsgases (7) ein Auslassventil (8) vorgesehen wird, bei welchem Verfahren eine unter einem Umgebungsdruck (P₀) bereitstehende Frischluft (9) von einem Abgasturbolader (10) angesaugt wird und dem Zylinder (2) als Ladeluft (3) unter einem vorgegebenen Ladeluftdruck (P_{L}) über die Spülschlitze (5) zugeführt wird, **dadurch gekennzeichnet, dass** ein Temperatursensor (12, 13) zur Messung einer Ansaugtemperatur (T₀) der Frischluft (9) und / oder zur Messung einer Ladelufttemperatur (T_{L}) der Ladeluft (3) vorgesehen wird, im Betriebszustand die Ansaugtemperatur (T₀) und / oder die Ladelufttemperatur (T_{L}) mit dem Temperatursensor (12, 13) gemessen wird, und aus der Ansaugtemperatur (T₀) und / oder der Ladelufttemperatur (T_{L}) eine Luftmenge an Ladeluft (3) ermittelt wird, mit welcher der Zylinder (2) beladen wird, und durch Ansteuerung des Auslassventils (8) die ermittelte Luftmenge an Ladeluft (3) dem Zylinder (2) zur Verfügung gestellt wird.

2. Verfahren nach Anspruch 1, wobei ein Umgebungsdrucksensor (11) zur Messung des Umgebungsdrucks (P₀) vorgesehen wird, der Umgebungsdruck (P₀) mit dem Umgebungsdrucksensor (11) gemessen wird und unter Berücksichtigung des Umgebungsdrucks (P₀) die Luftmenge an Ladeluft (3) ermittelt wird.

3. Verfahren nach einem der Ansprüche 1 oder 2, wobei eine Masse der Luftmenge an Ladeluft (3) ermittelt wird.

4. Verfahren nach einem der vorangehenden Ansprüche, wobei die Ansaugtemperatur (T₀) in einem Ansaugfilter (14) des Abgasturboladers (10), bevorzugt elektrisch mit einem Widerstandsthermometer (12), im Speziellen mit einem PT100 Widerstandsthermometer (12) gemessen wird, und / oder wobei die Ladelufttemperatur (T_{L}) zwischen einem Ladeluftkühler (15) und einem Receiverraum (16) und / oder im Receiverraum (16), bevorzugt elektrisch mit einem Widerstandsthermometer (13), im Speziellen mit einem PT100 Widerstandsthermometer (13) gemessen wird.

5. Verfahren nach einem der vorangehenden Ansprüche, wobei der Umgebungsdruck (P₀) im Ansaugfilter (14) des Abgasturboladers (10), bevorzugt mit einem Umgebungsdrucktransmitter (11), im Speziellen mit einem elektrischen Umgebungsdrucktransmitter (11) gemessen wird und /oder wobei der Ladeluftdruck (P_{L}) zwischen dem Ladeluftkühler (15) dem Receiverraum (16) und / oder im Receiverraum (16), bevorzugt mit einem Ladedrucktransmitter (17), im Speziellen mit einem elektrischen Ladedruckdrucktransmitter (17) gemessen wird.

6. Verfahren nach einem der vorangehenden Ansprüche, wobei zur Einstellung der Luftmenge an Ladeluft (3) ein Öffnungswinkel und / oder ein Schliesswinkel des Auslassventils (8) aus der Ansaugtemperatur (T₀) und / oder der Ladelufttemperatur (T_{L}) und / oder dem Umgebungsdruck (P₀) und / oder dem Ladeluftdruck (P_{L}) ermittelt wird, bevorzugt mit einer Formel errechnet wird, im speziellen aus einer Look-Up-Tabelle und / oder einem Kennlinienfeld, insbesondere als Funktion der Drehzahl und / oder der Leistung und / oder der Last ermittelt wird.

7. Verfahren nach einem der vorangehenden Ansprüche, wobei zur Optimierung eines Betriebsparameters, insbesondere zur Optimierung einer Betriebstemperatur und / oder eines Treibstoffverbrauchs und / oder einer Leistung und / oder eines Abgasverhaltens, ein Einspritzbeginn und /oder ein Einspritzende aus der Ansaugtemperatur (T₀) und / oder der Ladelufttemperatur (T_{L}) und / oder dem Umgebungsdruck (P₀) und / oder dem Ladeluftdruck (P_{L}) ermittelt wird, bevorzugt mit einer Formel errechnet wird, im speziellen aus einer Look-Up-Tabelle und / oder einem Kennlinienfeld, insbesondere als Funktion der Drehzahl und / oder der Leistung und / oder der Last ermittelt wird.

8. Verfahren nach einem der vorangehenden Ansprüche, wobei ein Kompressionsdruckverlauf (K) und / oder ein Zünddruckverlauf (Z) im Zylinder (2) optimiert wird.

9. Verfahren nach einem der vorangehenden Ansprüche, wobei in einem ersten Zylinder (2) ein Zylinderdrucksensor vorgesehen wird und in einem zweiten Zylinder (2) ein Zylinderdrucksensor vorgesehen wird, ein Zylinderdruck im ersten Zylinder (2) und im zweiten Zylinder (2) gemessen wird, und ein Zünddruckunterschied zwischen dem ersten Zylinder (2) und dem zweiten Zylinder (2) kompensiert wird.

10. Längsgespülter Zweitakt-Grossdieselmotor mit einem Abgasturbolader (10), wobei an einem Einlassbereich (4) eines Zylinders (2) des Zeitakt-Grossdieselmotors zur Zuführung einer Ladeluft (3) Spülschlitze (5) vorgesehen sind und an einem Zylinderdeckel (6) des Zylinders (2) zum Ausstoss eines Verbrennungsgases (7) ein Auslassventil (8) vorgesehen ist, wobei im Betriebszustand eine unter einem Umgebungsdruck (P₀) bereitstehende Frischluft (9) vom Abgasturbolader (10) angesaugt wird und dem Zylinder (2) als Ladeluft (3) unter einem vorgegebenen Ladeluftdruck (P_{L}) über die Spülschlitze (5) zugeführt wird, **dadurch gekennzeichnet, dass** ein Temperatursensor (12, 13) zur Messung einer Ansaugtemperatur (T₀) der Frischluft (9) und / oder zur Messung einer Ladelufttemperatur (T_{L}) der Ladeluft (3) vorgesehen ist, so dass die Ansaugtemperatur (T₀) und / oder die Ladelufttemperatur (T_{L}) mit dem Temperatursensor (12, 13) messbar ist, und elektronische Auswertemittel vorgesehen sind, so dass aus der Ansaugtemperatur (T₀) und / oder der Ladelufttemperatur (T_{L}) eine Luftmenge an Ladeluft (3) ermittelbar ist, mit welcher der Zylinder (2) beladbar ist, und eine Ansteuerung für das Auslassventil (8) vorgesehen ist, so dass durch Ansteuerung des Auslassventils (8) die ermittelte Luftmenge an Ladeluft (3) dem Zylinder (2) im Betriebszustand zur Verfügung gestellt wird.

11. Längsgespülter Zweitakt-Grossdieselmotor nach Anspruch 10, wobei ein Umgebungsdrucksensor (11) zur Messung des Umgebungsdrucks (P₀) vorgesehen ist.

12. Längsgespülter Zweitakt-Grossdieselmotor nach einem der Ansprüche 10 oder 11, wobei eine Masse der Luftmenge an Ladeluft (3) ermittelbar ist.

13. Längsgespülter Zweitakt-Grossdieselmotor nach einem der Ansprüche 10 bis 12, wobei der Temperatursensor (12) zur Messung der Ansaugtemperatur (T₀) in einem Ansaugfilter (14) des Abgasturboladers (10) vorgesehen ist, und bevorzugt ein elektrisches Widerstandsthermometer (12), im Speziellen ein PT100 Widerstandsthermometer (12) ist, und / oder wobei der Temperatursensor (13) zur Messung der Ladelufttemperatur (T_{L}) zwischen einem Ladeluftkühler (15) und einem Receiverraum (16) und / oder im Receiverraum (16) vorgesehen ist, und bevorzugt ein elektrisches Widerstandsthermometer (13), im Speziellen ein PT100 Widerstandsthermometer (13) ist.

14. Längsgespülter Zweitakt-Grossdieselmotor nach einem der Ansprüche 10 bis 13, wobei der Umgebungsdrucksensor (11) zur Messung des Umgebungsdrucks (P₀) im Ansaugfilter (14) des Abgasturboladers (10) vorgesehen ist, und bevorzugt ein Umgebungsdrucktransmitter (11), im Speziellen ein elektrischer Umgebungsdrucktransmitter (11) ist und / oder wobei ein Ladedrucksensor (17) zur Messung des Ladeluftdrucks (P_{L}) zwischen dem Ladeluftkühler (15) und / oder dem Receiverraum (16) und / oder im Receiverraum (16) vorgesehen ist, und bevorzugt ein Ladedrucktransmitter (17), im Speziellen ein elektrischer Ladedrucktransmitter (17) ist.

15. Längsgespülter Zweitakt-Grossdieselmotor nach einem der Ansprüche 10 bis 14, wobei in einem ersten Zylinder (2) ein Zylinderdrucksensor vorgesehen ist und in einem zweiten Zylinder (2) ein Zylinderdrucksensor vorgesehen ist, so dass ein Zylinderdruck im ersten Zylinder und im zweiten Zylinder messbar ist, und ein Zünddruckunterschied zwischen dem ersten Zylinder (2) und dem zweiten Zylinder (2) kompensierbar ist.

16. Längsgespülter Zweitakt-Grossdieselmotor nach einem der Ansprüche 10 bis 15, wobei der Zweitakt-Grossdieselmotor ein elektronisch gesteuerter Motor, insbesondere ein Wärtsilä RT-Flex Motor oder ein MAN B&W ME Motor ist, so dass der Öffnungswinkel und / oder Schliesswinkel des Auslassventils (8) und / oder ein Einspritzzeitpunkt und / oder eine Einspritzdauer unabhängig elektronisch einstellbar ist und bevorzugt hydraulisch betätigbar ist.
